# EUROPEAN PATENT SPECIFICATION

(11) **EP 3 849 780 B1**
(45) Date of publication and mention of the grant of the patent: **12.06.2024**
(21) Application number: 19859896.3
(22) Date of filing: 12.09.2019
(51) Int. Cl.: B29C 64/124, B29C 64/295, B22F 3/105, B22F 3/10, B22F 10/12, B22F 12/13, B33Y 10/00, B33Y 30/00, B33Y 40/20, B33Y 80/00, B33Y 70/10, B22F 12/41, B22F 12/46

(54) **THREE-DIMENSIONAL OBJECT AND MANUFACTURING METHOD THEREOF**
DREIDIMENSIONALES OBJEKT UND VERFAHREN ZU SEINER HERSTELLUNG
OBJET TRIDIMENSIONNEL ET SON PROCÉDÉ DE FABRICATION

(30) Priority: 12.09.2018 NL 2021611
(43) Date of publication of application: 21.07.2021
(73) Proprietor: Admatec Europe B.V., 1822 CD Alkmaar (NL)
(72) Inventor: OPSCHOOR, Jan, 1822 CD Alkmaar (NL); SAURWALT, Jacob Jan, 1822 CD Alkmaar (NL)
(74) Representative: Nederlandsch Octrooibureau
(86) International application number: PCT/NL2019/050595
(87) International publication number: WO 2020/055252

(56) References cited:
- CN-A- 107 627 601
- US-A1- 2012 308 837
- US-A1- 2017 334 129
- US-A1- 2018 243 176

## Description

### Field of the invention

The invention relates to a manufacturing method for three-dimensional objects, more particularly indirect stereolithography (SLA) or dynamic light processing (DLP), and to objects obtained thereby.

### Background art

Additive manufacturing (AM) is a process, usually a layer-by-layer process, of joining materials to make objects from a three-dimensional model, such as a computer-aided design (CAD) data model. The applications of additive manufacturing processes have been expanding rapidly over the last 20 years. Among additive manufacturing processes are material jetting, material extrusion, direct energy deposition, sheet lamination, binder jetting, powder bed fusion and photopolymerization. These technologies can all be applied to shape ceramic or metal components, starting from (sub)micrometer-sized ceramic or metal particles (powder).

There are basically two different categories of AM processes: (i) single-step processes (also called 'direct' processes), in which three-dimensional objects are fabricated in a single operation where the basic geometrical shape and the basic material properties of the intended product are achieved simultaneously and (ii) multi-step processes (also called 'indirect' processes), in which three-dimensional objects are fabricated in two or more steps wherein the first step typically provides the basic geometric shape and the following steps consolidate the product to the intended material properties. The present invention concerns an indirect AM process which makes use of a sacrificial binder material to shape solid powder particles. The binder material is obtained using photopolymerization of a polymerizable resin and a polymerization photoinitiator contained in a slurry which also contains the ceramic or metal particles. The sacrificial binder material is removed in a subsequent 'debinding' treatment. Examples of the process according to the present invention are indirect stereolithography (SLA), Digital Light Processing (DLP) and Large Area Maskless Photopolymerization (LAMP).

Additive manufacturing methods or 3D-printing methods are known in the art, for example as can be found on www.3dhubs.com/knowledge-base/additive-manufacturing-technologies-overview. WO 2017/009368, US 2018/0243176 and US 2012/0308837 describe a 3D-printing method which may be performed above room temperature. Conventional methods may at times suffer from decreased product quality, e.g. in terms of delamination issues wherein the distinct layers separate during or after the manufacturing process, which leads to product break-down. The present invention provides in the need in the art for an additive manufacturing method for producing a three-dimensional object that obviated such delamination problems and provides three-dimensional objects of improved quality and strength. Additionally, the process according to the invention is improved in terms of processability of the curable slurry.

### Summary of the invention

The present inventors have developed a manufacturing process for producing a three-dimensional object, wherein the resin is polymerized at a temperature above the glass temperature of the polymerized resin. As such, the resin, during polymerization, has increased flowability which was found to have numerous advantages. The process according to the invention avoids to building of tension during the polymerization steps, which in turn leads to improved attachment between the layers and to a prevention of cracking at any of the subsequence steps (i.e. steps (d) and onwards) of the manufacturing process. Further, the density of the layers in the vertical direction is increased, which offers an improved density of the final product in all directions and a stronger object which suffers from reduced delamination problems. Also, at the elevated temperature the moisture content in the slurry is reduced and/or the capacity of the slurry to attract water is reduced, such that the quality of the slurry and the final three-dimensional object is improved.

It has been suggested in the art to perform a 3D printing process at elevated temperature (i.e. above room temperature), but it has never been suggested to perform the printing at a temperature above the glass temperature of the polymerized resin. For example, US 2018/0243176 discloses a printing process at 60 °C employing UDMA, which in polymerized form has a T_{g} of 139 °C. The present inventors have developed a 3D printing process, wherein for the first time the polymerization of the resin is performed at a temperature above the glass temperature of the polymerized resin.

### Description of the invention

The present inventors found that the above object can be met by an additive manufacturing method wherein the polymerization of the resin by scanning the voxels of the first layer in accordance with the model with radiation occurs at a temperature above room temperature and above the glass transition temperature of the resin.

Accordingly, the present invention provides an additive manufacturing method for producing a three-dimensional object, said method comprising:
(a) providing a three-dimensional model of the object, which divides the object in voxels;
(b) applying a first layer of a radiation-curable slurry onto a target surface, wherein the slurry contains a polymerizable resin and a photoinitiator;
(c) polymerizing the resin by illuminating the voxels of the first layer in accordance with the model with radiation at a temperature above room temperature and above the glass transition temperature of the polymerized resin, to cause polymerization of the resin to form a cross-linked polymeric matrix;
(d) applying a subsequent layer of the slurry on top of the first layer;
(e) polymerizing the resin by illuminating the voxels of the subsequent layer in accordance with the model with radiation at a temperature above room temperature and above the glass transition temperature of the resin, to cause polymerization of the polymerized resin to form a cross-linked polymeric matrix;
(f) repeating steps (d) and (e), wherein each time a subsequent layer is applied onto the previous layer, to produce a green body;
and optionally:
(g) removing the cross-linked polymeric matrix from the green body obtained in step (f) to obtain a brown body; and
(h) sintering the brown body obtained in step (h) to obtain a white body,
wherein the green body or the white body is the three-dimensional object.

The method according to the invention can also be referred to as a stereolithography method. The term 'stereolithography', abbreviated as 'SLA', as used herein refers to a method to build three-dimensional metal objects through layer-by-layer curing of a radiation curable slurry comprising a polymerizable resin and metal precursor particles using irradiation controlled by a three-dimensional model, preferably in the form of Computer Aided Design (CAD) data from a computer. Although stereolithography is usually performed using UV-radiation to initiate curing of the polymerizable resin, the process of 'stereolithography' in the context of the present invention can also be performed using other types of radiation.

The method according to the invention can also be referred to as a Digital Light Processing method. The term 'Digital Light Processing', abbreviated as 'DLP', as used herein refers to a stereolithographic method to build three-dimensional metal objects wherein each layer is patterned as a whole by exposure to radiation in the pattern of a bitmap defined by a spatial light modulator. DLP is also referred to in the art as 'Large Area Maskless Photopolymerization', abbreviated as 'LAMP'. Both terms are considered interchangeable. Although DLP and LAMP are usually performed using UV-radiation to initiate curing of the polymerizable resin, the processes of `DLP' and 'LAMP in the context of the present invention can also be performed using other types of radiation.

In the context of the present invention, the terms 'polymerization' and 'curing' are considered to be synonymous and are used interchangeably. Likewise, the terms 'polymerizable' and 'curable' are considered to be synonymous and are used interchangeably.

The additive manufacturing method according to the invention can be used to manufacture objects of any suitable material, including plastic, metal, metal oxides and ceramics, and mixtures thereof are also envisioned within the context of the present invention. As understood by the skilled person, the composition of the slurry may vary accordingly. For the manufacture of plastic three-dimensional metal objects, no further components are required and the cross-linked polymeric matrix, formed from the resin, is the plastic material of the end-product. For metal, metal oxide and ceramic objects, the slurry further contains particles, which may be metal particles, metal oxide particles, ceramic particles, metal precursor particles. The cross-linked polymeric matrix is used as sacrificial binder for the particles and is later removed from the object. Such slurries are known in the art. Thus, in one embodiment, the manufacturing method according to the invention is for the manufacture of plastic objects and the slurry does not contain metal, metal oxide, metal precursor or ceramic particles. Within this embodiment, steps (g) and (h) are typically omitted. Thus, in an alternative embodiment, the manufacturing method according to the invention is for the manufacture of metal, metal oxide or ceramic objects and the slurry further contains metal, metal oxide, metal precursor or ceramic particles. Within this embodiment, steps (g) and (h) are typically performed. The additive manufacturing method according to this embodiment is an indirect method meaning that in a first step, a sacrificial organic binder is used to shape the particles into a three-dimensional object comprising particles that are held together by the organic binder and that in subsequent steps this sacrificial organic binder is removed and the three-dimensional object is further processed to obtain the intended three-dimensional object. The sacrificial organic binder gives the green body sufficient strength by joining the particles such that the green body can be further processed.

The slurry contains a polymerizable resin and a photoinitiator. Optionally, the slurry further contains one or more of metal, metal oxide, metal precursor or ceramic particles. In a preferred embodiment, the slurry comprises: (i) 2-45 wt% of a polymerizable resin; (ii) 0.001-10 wt% of one or more polymerization photoinitiators; and (iii) 55-98 wt% of particles. The slurry may further comprise one or more additives, as further specified below.

The polymerizable resin comprises monomers, oligomers or combinations thereof. In a preferred embodiment, the polymerizable resin comprises radically polymerizable monomers, oligomers or combinations thereof chosen from the group consisting of mono-, di-, tri- and higher functional acrylate monomers, epoxy acrylates, polyester/polyether acrylates, urethane acrylates, oligo amine acrylates, methacrylates, thiol acrylates and mixtures thereof. In another preferred embodiment, the polymerizable resin comprises cationically polymerizable monomers, oligomers or combinations thereof chosen from the group consisting of epoxide acrylates, vinyl ether acrylates, allyl ether acrylates, oxetane acrylates and combinations thereof. Naturally, radically polymerizable resins are to be combined with one or more radical polymerization photoinitiators and cationically polymerizable resins are to be combined with one or more cationic polymerization photoinitiators. In a preferred embodiment, the resin comprises dimethacrylate monomers, such as urethane-dimethacrylate monomers. In an alternative embodiment, the resin does not comprise urethane-dimethacrylate monomers, or no dimethacrylate monomers.

The polymerizable resin in the slurry, once cured into a cross-linked polymeric matrix, may act as the sacrificial organic binder glue between the particles in an intermediate three-dimensional object. The sacrificial organic binder is removed from the three-dimensional object in step (g) to further process it to a three-dimensional object. Hence, the sacrificial organic binder has to provide the intermediate three-dimensional object with sufficient strength and stability to be further processed. The stability and strength of the sacrificial organic binder that is formed after polymerization of the polymerizable resin is provided by the use of cross-linking monomers and/or oligomers.

Photoinitiators for radical polymerization and cationic polymerization are well-known in the art. Reference is made to J.P. Fouassier, J.F. Rabek (ed.), Radiation Curing in Polymer Science and Technology: Photoinitiating systems, Vol. 2, Elsevier Applied Science, London and New York 1993, and to J.V. Crivello, K. Dietliker, Photoinitiators for Free Radical, Cationic & Anionic Photopolymerization, 2nd Ed., In: Surface Coating Technology, Editor: G. Bradley, Vol. III, Wiley & Sons, Chichester, 1999, for a comprehensive overview of photoinitiators. It is within the skills of the artisan to match the type of polymerizable resin, the type of radiation and the one or more photoinitiators used in the slurry.

The slurry may further contain one or more additives, such as surfactants, dispersing agents, polymerization inhibitors and/or stabilizers. Suitable additives and preferred amounts thereof are known to the skilled person. It is important that polymerization of the slurry can be controlled when particular portions of the slurry are exposed to radiation in step (c). Furthermore, the slurry should have a certain storage stability. To this end, the slurry may further comprise 0.001-1 wt% of one or more polymerization inhibitors or stabilizers based on the total weight of the slurry, preferably 0.002-0.5 wt%. The polymerization inhibitors or stabilizers are preferably added in such an amount that the slurry is storage stable over a period of 6 months. A slurry is considered storage stable if the viscosity increase is less than 10% over a period of 6 months. Examples of suitable polymerization inhibitors or stabilizers for a radically polymerizable resin are phenols, hydroquinones, phenothiazine and TEMPO. Examples of suitable polymerization inhibitors or stabilizers for a cationically polymerizable resin are compounds containing alkaline impurities, such as amines, and/or sulfur impurities.

In a preferred embodiment, the slurry further contains metal particles, metal oxide particles, metal precursor particles and/or ceramic particles. Herein, "metal precursor" refers to precursors of metals that are converted into metallic metal in a late stage of the process. Such use of metal precursors to prepare metallic objects is known in the art, e.g. from WO 2017/081160. Examples of metal precursors that can be used in the slurry are chosen from the group consisting of metal oxides, metal hydroxides, metal sulphides, metal halides, organometallic compounds, metal salts, metal hydrides, metal-containing minerals and combinations thereof. Further, metal precursor particles and metal particles are readily combined in the slurry in the manufacture of metal objects. In case metal precursors are used, the skilled person will understand that an additional conversion step, performed prior to step (h), is typically needed to convert the metal precursors into metals. This step can be performed using methods known in the art, as described further below.

Metal oxides can be used as metal precursor in the manufacture of metal objects, but also as metal oxide particles wherein a metal oxide object is manufactured. In other words, the use of metal oxides which are not converted into their metallic counterpart is also envisioned within the present invention.

Typically, the particles are added in the form of a powder, and any suitable powder known in the art may be used. Ceramic particles are preferably added as ceramic injection molding (CIM) powder and metal particles are preferably added as metal injection molding (MIM) powder. The particles preferably have a D₅₀ in the range of 0.02 - 50 µm, 0.1 - 40 µm, preferably in the range 0.4 - 10 µm. The particle size, preferably expressed as D₅₀ value, may be determined by laser diffraction, for example using a Malvern Mastersizer 3000 laser diffraction particle size analyzer.

The upper limit of the amount of particles in the slurry is mainly governed by the viscosity of the slurry, and thus the processability during the manufacturing method according to the invention. For the preparation of high-strength and high-density three-dimensional objects, the volume fraction of particles in the slurry is preferably as high as possible. The volume fraction of particles in the slurry also determines the volume fraction of particles in the green body and the shrinkage of the brown body during sintering. However, a higher volume fraction of particles results in a higher viscosity, see e.g. J. Deckers et al., Additive manufacturing of ceramics: A review, J. Ceramic Sci. Tech., 5 (2014), pp 245-260, and to M.L. Griffith and J.W. Halloran, Ultraviolet curing of highly loaded ceramic suspensions for stereolithography of ceramics, manuscript for the Solid Freeform Fabrication Symposium 1994. Optimal volume fractions of the particles in the slurry were found to be in the range of 0.10 - 0.74, preferably in the range of 0.15 - 0.65, more preferably in the range of 0.30 - 0.60, most preferably in the range of 0.45 - 0.55. On total weight basis, the particles are preferably present in the slurry in an amount of 55-98 wt%.

The viscosity of the slurry at room temperature is preferably between 0.01 and 250 Pa·s, more preferably in the range of 0.02 - 50 Pa s, even more preferably between 0.05 and 40 Pa s, most preferably between 0.1 and 35 Pa s. Herein, the viscosity is measured at 20°C at a shear rate between 10 s⁻¹ and 100 s⁻¹ using a plate-plate rheometer. In a preferred embodiment the slurry has no yield point. The polymerized resin has a glass temperature, after it has been polymerized in step (c) or (e). Herein, "glass temperature" and "glass transition temperature" are used interchangeably. Typically, the glass temperature of the applied resin is known in the art, or can be readily determined by the skilled person, e.g. by the method described in section 2.4 of Barszczewska-Rybarek, Dental Materials, 2014, 30, 1336-1344. The resin may for example contain dimethacrylate monomers, such as urethane dimethacrylate monomers. Upon polymerization, these may have a glass temperature in the range of-10 °C to 200 °C, see Table 2 of Barszczewska-Rybarek (Dental Materials, 2014, 30, 1336-1344). For example, polymerized UDMA (referred to as HEMA/HMDI by Barszczewska-Rybarek) has a T_{g} of 139 °C. Preferably, the glass temperature of the polymerized resin is below 100 °C, more preferably below 90 °C, below 80 °C, below 70 °C, below 60 °C, below 50 °C, or even below 40 °C. The lower limit of the glass temperature is not that relevant, since the polymerization in step (c) is performed above room temperature anyway. Nonetheless, the glass temperature may be in the range of -20 °C - 100 °C, preferably -10 °C - 90 °C, more preferably 0 °C - 80 °C, even more preferably 10 °C - 70 °C, such as 20 °C - 60 °C or 25 °C - 50 °C, most preferably 30 °C - 40 °C.

In a preferred embodiment, the resin contains one or more of the compounds selected from the group consisting of 1,6-hexamethylene diacrylate (CAS: 13048-33-4; T_{g} = 43 °C); neopentyl glycol propoxylate (2 PO) diacrylate (CAS: 84170-74-1; T_{g} = 32 °C); (1-methyl-1,2-ethandiyl)bis[oxy(methyl-2,1-ethandiyl)]diacrylat (CAS: 42978-66-5; T_{g} = 62 °C); dipropylene Glycol Diacrylate (CAS: 57472-68-1; T_{g} = 104 °C); 1,1,1-trimethylolpropane triacrylate (CAS: 15625-89-5; T_{g} = 62 °C); propoxylated glycerol triacrylate (CAS: 52408-84-1; T_{g} = 33 °C); trimethylolpropane propoxylate triacrylate (CAS: 53879-54-2; T_{g} = -15 °C). In an especially preferred embodiment, the resin comprises at least neopentyl glycol propoxylate (2 PO) diacrylate.

The process according to the invention is particularly suitable to be used with small particles, such as having a particle size below 0.1 µm. Typically, the skilled person has no option to select a desired particle size, but has to work with the particle size in which the desired particles (metal, metal precursor, metal oxide or ceramics) is available. Certain materials (e.g. zirconia, silicon carbide, silicon nitride) are only available in such small particle sizes, and conventional three-dimensional printing processes have problems with such small particles. Such small particles typically give rise to increased light scattering in view of a reduced penetration depth of the light during the illumination steps, which requires greater power of the radiation source. Furthermore, smaller particles lead to increased tension within the cured layers, which in turn leads to variation in density at the inter-layer interfaces and increased delamination problems, when using conventional processes. Such small particle size typically occur with zirconium oxide (zirconia), silicon carbide and silicon nitride. Without being bound to a theory, the increased flowability and/or reduced viscosity of the slurry, even during polymerization, is believed to lead to better attachment of the various layers onto one another, leading to more homogeneous end-product, wherein the separate layers are no longer visually distinguishable. Although a reduction in problems with delamination is a general advantage of the process according to the present invention, this advantage is particularly desired when working with small particles. Thus, in a preferred embodiment, the particles have a D₅₀ in the range of 0.02 - 0.1 µm, even more preferably in the range of 0.03 - 0.06 µm. Thus, in one embodiment, the particles include at least one of, preferably are selected from, zirconia particles, silicon carbide and silicon nitride. In an especially preferred embodiment, the method according to the invention is for the manufacturing of three-dimensional zirconia object, wherein the particles are zirconia particles.

In step (b) of the process according to the invention, a first layer of a radiation-curable slurry is applied onto a surface. In step (d), the slurry is similarly applied although not directly onto the surface, but onto the cured previous layer. Step (f) defines that step (d) is repeated as many times as needed to complete the three-dimensional object. The total number of cycles needed is defined by the three-dimensional model.

Preferably, step (b) and/or steps (d), more preferably step (b) and steps (d), are performed at a temperature above room temperature and above the glass transition temperature of the polymerized resin, preferably in the range of 40 - 100 °C, more preferably in the range of 50 - 90 °C, more preferably 55 - 80 °C , even more preferably 60 - 75 °C, most preferably 60 - 70 °C. In a preferred embodiment, steps (b) and (d) are performed at the same elevated temperature at which steps (c) and (e) are performed. Preferably, the process according to the invention further comprises a step of heating the slurry to the desired temperature before step (b), and then applying the heated slurry during steps (b) and (d), and polymerizing the applied slurry in steps (c) and (e), again at the desired temperature. Herein, the temperature is preferably kept constant throughout the series of steps, although the skilled person will appreciate that some marginal cooling of the slurry may occur without hampering the present process.

Performing the process according to the invention with a pre-heated slurry has the slurry is less vulnerable to attract moisture. Typically, radiation-curable slurries attract water, which is reduced at elevated temperature. A reduced water content leads to an improved slurry quality, a reduced occurrence of flocculation and improved properties of the end-product. The end-product is more homogeneous in terms of density, has improved adhesion between layers and thus suffers from reduced delamination issues.

In a preferred embodiment, the thickness of the first and subsequent layers of slurry is between 5 and 300 µm, more preferably between 7 and 200 µm, still more preferably between 9 and 100 µm. Layers having a thickness of between 8 and 50 µm, preferably between 9 and 30 µm are also envisioned in the context of the present invention.

In step (c), the resin is polymerized by illuminating the voxels of the first layer in accordance with the 3D model with radiation at a temperature above room temperature and above the glass transition temperature of the resin, to cause polymerization of the resin to form a cross-linked polymeric matrix. In steps (e), the same occurs with the subsequent layers. Step (f) defines that step (e) is repeated as many times as needed to complete the three-dimensional object. The total number of cycles needed is defined by the three-dimensional model. Preferably, the 3D model is a CAD model.

The cross-linked polymeric matrix is obtained by polymerization of the reactive monomers, oligomers or combinations thereof in the slurry. The structure of the three-dimensional object comprising the cross-linked polymeric matrix is referred to in the art as a 'green body' or 'green compact'. In case the process according to the invention is for preparing a plastic three-dimensional object, the green body is the final three-dimensional object as obtained by the process. Alternatively, the cross-linked polymeric matrix acts as sacrificial binder containing the particles, and the binder is removed from the green body in steps (g) and (h), whereas the particles form the material of the final three-dimensional object.

In a preferred embodiment, the radiation used in steps (c) and (e) is actinic radiation. Preferred types of actinic radiation are UV-radiation, visible light and IR-radiation. Preferred UV-radiation has wavelengths between 10 and 380 nm, more preferably between 250 and 350 nm. Visible light has a wavelength between 380 and 780 nm. As will be appreciated by those skilled in the art, the one or more polymerization photoinitiators in the slurry must be responsive to the type of radiation applied. It is within the skills of the artisan to match photoinitiators with the spectral output of the radiation source.

The illumination of the voxels of the slurry layers in steps (c) and (e) in accordance with the 3D model can be performed voxel-by-voxel (scanning) with one or more lasers. Hence, in an embodiment, the additive manufacturing method as defined herein before is a stereolithographic (SLA) method for producing a three-dimensional metal object wherein scanning of the voxels of the slurry layers in steps (c) and (e) in accordance with the model is performed voxel-by-voxel. It is also possible to perform the illumination of the voxels of the slurry layers in steps (c) and (e) in accordance with 3D model by simultaneously exposing all voxels in the layer to radiation through a mask. This mask defines the pattern of the specific layer to be cured in accordance with the model. Thus, in an embodiment of the invention, the scanning of the voxels of the slurry layers in steps (c) and (e) in accordance with the model is performed by simultaneously exposing all voxels in the layer to radiation through a mask. The illumination of the voxels of the slurry layers in steps (c) and (e) can also be performed by simultaneously exposing all voxels in the layer to radiation using a spatial light modulator such as a beamer or a projector. This spatial light modulator projects a radiation pattern onto the layer such that voxels are cured in accordance with the model. Hence, in a preferred embodiment, the additive manufacturing method as defined herein before is a Dynamic Light Processing (DLP) method for producing a three-dimensional metal object wherein scanning of the voxels of the slurry layers in steps (c) and (e) is performed by simultaneously exposing all voxels in the layer to radiation.

Steps (c) and (e) are performed at elevated temperature, i.e. above room temperature. Herein, room temperature typically refers to a temperature of 20 °C. The temperature at which steps (c) and (e) are performed are thus at least above 20 °C, preferably at least above 25 °C. Also, the temperature should be above the glass temperature of the polymerized resin applied in the slurry. The skilled person is capable of determining the glass temperature of the polymerized resin, and thus knows at which temperature the steps (c) and (e) should be applied. Preferably, the temperature at which steps (c) and (e), and preferably also steps (b) and (d), are performed is at least 5 °C, more preferably at least 10 °C, even more preferably at least 20 °C or even at least 30 °C, above the glass temperature of the resin. Most preferably, the temperature during at which these steps are performed is as much as possible above the glass temperature of the polymerized resin but low enough to avoid thermal degradation (polymerization) of the slurry. In practice, the upper temperature limit is determined by the type of resin and photoinitiator, as polymerization in the absence of radiation should be avoided. This is readily determined by the skilled person. In a preferred embodiment, the temperature applied in steps (c) and (e) is in the range of 40 - 100 °C, preferably in the range of 50 - 90 °C, more preferably 55 - 80 °C , even more preferably 60 - 75 °C, most preferably 60 - 70 °C. Preferably, steps (b) and (d) are performed within the same temperature ranges. Such temperatures have been found to provide the ideal balance of avoiding polymerization of the photoinitiator in the absence of light, which may occasionally occur at more elevated temperatures, and yet provide optimal results as further discussed herein. In an especially preferred embodiment, the temperature at which step (c) is performed is constant, meaning that the temperature at which the slurry is deposited is substantially equal to the temperature of the stage onto which the slurry is deposited. Typically, the polymerization occurs in a chamber with a slurry depositor in the top part and the stage in the bottom part, and the chamber is set at a substantially constant temperature at which steps (b) - (e) occur.

In case the slurry contains particles and the three-dimensional object is a metal, metal oxide or ceramic object, the green body is subsequently subjected to debinding in step (g) to remove the organic binder. The resulting three-dimensional object mainly consisting of the particles after the debinding step is referred to in the art as a 'brown body'. The sacrificial binder can be removed by heating the green body, typically to a temperature in the range of 100 - 600 °C, more preferably in the range of 150 - 500 °C, in the range of 200 - 450 °C. A reduced pressure or (partial) vacuum may be applied, in order to facilitate evaporation of the components of the sacrificial binder. In debinding, purely thermal as well as thermo-chemical processes may take place. The debinding step can be performed by oxidation or combustion in an oxygen containing atmosphere, in particular in case a ceramic object is manufactured. The debinding step can further be performed in a protective or hydrogen containing environment, in particular in case a metal or metal oxide object is manufactured. Preferably, the debinding step is performed as a pyrolysis step in the absence of oxygen. In case metal precursor particles are used, the debinding in step (g) may also remove at least part of the organic part of an organo-metallic metal precursor.

Before heating the green body in step (g), the green body can optionally be treated with a solvent to separate the green body from the uncured slurry and/or to extract elutable organic components from the green body. Depending on the solubility of the elutable components, this solvent can be either aqueous or organic in nature. Examples of organic solvents that can be used are isopropylalcohol, acetone, trichloroethane, heptanes and ethanol. Mostly, isopropylalcohol is used.

In step (h) of the method, the brown body is sintered to form the intended three-dimensional object. Sintering results in compacting and solidifying of the porous structure of the brown body, whereby the body becomes smaller and gains strength. Typically sintering ensures that the density of the end-product increases, such that the individual layers are no longer distinguishable. In case metal particles have been used, this step may occur under reducing conditions, as known in the art, such that any oxidized metal present in the brown body is reduced to its metallic state and that oxidation of the metals is prevented. Sintering may also occur under oxidative conditions, such as air, in particular when no reduction of the metal is desired. This is for example suitable in case zirconia objects are manufactured.

The sintered body is also referred to in the art as a 'white body'. Sintering typically takes place at temperatures below the melting temperature of the material (e.g. metal, alloy, metal oxide, ceramics). The skilled person is capable of choosing the desired sintering temperature, depending on the metal or alloy used. The sintering of the white body typically takes place in a sintering furnace, preferably at a temperature in the range of 500 - 2500 ° C, more preferably in the range of 1000 - 2500°C. The sintering step may encompass more than one temperature cycle to avoid thermal shocks which may lead to breakage of the three-dimensional metal object. This step is known in the art as sintering and can be performed using methods known in the art.

Optionally, in case metal precursor particles have been used in the slurry, the metal precursor should be converted into its metallic counterpart, prior to step (h). Thus, the process may contain a step wherein the metal precursor brown body is converted to a metal brown body. Such processes are known in the art. For example, reference is made to the electro-decomposition or electro-deoxidation process as described in WO 99/64638. In this process, which is called the `FFC process' in the art, a solid compound such as for example a metal oxide, is arranged in contact with a cathode in an electrolysis cell comprising a fused salt. A potential is applied between the cathode and an anode of the cell such that the compound is reduced. The inventors have unexpectedly found that this process can also be used to convert metal precursor brown bodies produced in accordance with the process according to the invention to a three-dimensional metal object. Further reference is made to modifications of the `FFC process' as described in WO 01/62996, WO 02/40748, WO 03/048399, WO 03/076690, WO 2006/027612, WO 2006/037999, WO 2006/092615, WO 2012/066299 and WO 2014/102223. The principle of the `FFC process' can be used to reduce brown bodies comprising oxides of beryllium, boron, magnesium, aluminium, silicon, scandium, titanium, vanadium, chromium, manganese, iron, cobalt, nickel, copper, zinc, germanium, yttrium, zirconium, niobium, molybdenum, hafnium, tantalum, tungsten, and the lanthanides including lanthanum, cerium, praseodymium, neodymium, samarium, and the actinides including actinium, thorium, protactinium, uranium, neptunium and plutonium to the corresponding metals. Pure metals may be formed by reducing a brown body comprising one type of metal oxide particles and alloys may be formed by reducing a brown body comprising particles consisting of mixtures of metal oxides containing different metal atoms.

A further aspect of the invention concerns a three-dimensional object obtainable by the method as defined hereinbefore. The three-dimensional metal objects according to the present invention differ from those manufactured using state of the art techniques by a better performance of the object due to the stress-free and very homogeneous microstructure obtained by curing the slurry at a temperature above room temperature and above the glass temperature of the polymerized resin. Such three-dimensional objects are unprecedented in the art. The three dimensional object according to the invention may be referred to as a 3D printed object.

The three-dimensional object according to the invention may be made from plastic, metal, metal oxide and/or ceramics. In a particular preferred embodiment, it is made from metal or metal oxide, most preferably from zirconia.

The invention further pertains to an additive manufacturing system, which may also be referred to as a 3D-printer. The system according to the invention is a 3D-printer as known in the art, including (i) a substrate or surface for depositing a layer of radiation-curable slurry, (ii) a slurry depositor for containing and configured for depositing the slurry onto the substrate, (ii) a stage configured to hold the three-dimensional object that is being manufactured or - in other words - an arrangement of layers of curable and/or cured slurry, (iv) a radiation source arranged to illuminate the layer of slurry deposited onto the surface, (v) a positioning system which is configured to align the radiation source with respect to the slurry that is to be cured in accordance with a 3D model, typically a CAD model. The system according to the invention further contains means for heating the slurry prior to being deposited onto the surface. Such heating means are preferably implemented into the slurry depositor, which is configured to contain slurry that is being or has been heated to a desired temperature above room temperature and above the glass temperature of the polymerized resin contained in the slurry. The heating means is preferably capable of heating the slurry to a temperature of range of 40 - 100 °C, preferably in the range of 50 - 90 °C, more preferably 55 - 80 °C , even more preferably 60 - 75 °C, most preferably 60 - 70 °C. The heating means may by any means suitable to heat the slurry to the desired temperature. Such heating means are known in the art.

The radiation source is typically positioned on the opposite side of the substrate, opposite to the surface where the layer of slurry is deposited onto. Herein, the surface is transparent for the radiation that is emitted from the radiation source. The position system may include a scanning laser connected to a computer that can read the 3D model and control the positioning of the scanning laser in accordance with the model. Alternatively, the positioning system may include a masking screen positioned substantially parallel to the resin layer, for blocking at least part of the incident radiation from the radiation source in accordance with a cross-sectional slice of the three-dimensional object as defined by the 3D model. Such an additive manufacturing system is known in the art, e.g. from WO 2015/107066. Alternatively, the radiation source and the position system are formed by a Digital Light processing (DLP) chip, which emits a two-dimensional pattern in line with the 3D model. As such, no further means for positioning the radiation source with respect to the voxels to be cured is required.

The invention has been described by reference to certain embodiments discussed above. It will be recognized that these embodiments are susceptible to various modifications and alternative forms well known to those of skill in the art. For a proper understanding of the invention, it is to be understood that the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

The following examples are offered for illustrative purposes only, and are not intended to limit the scope of the present invention in any way.

### Description of the figures

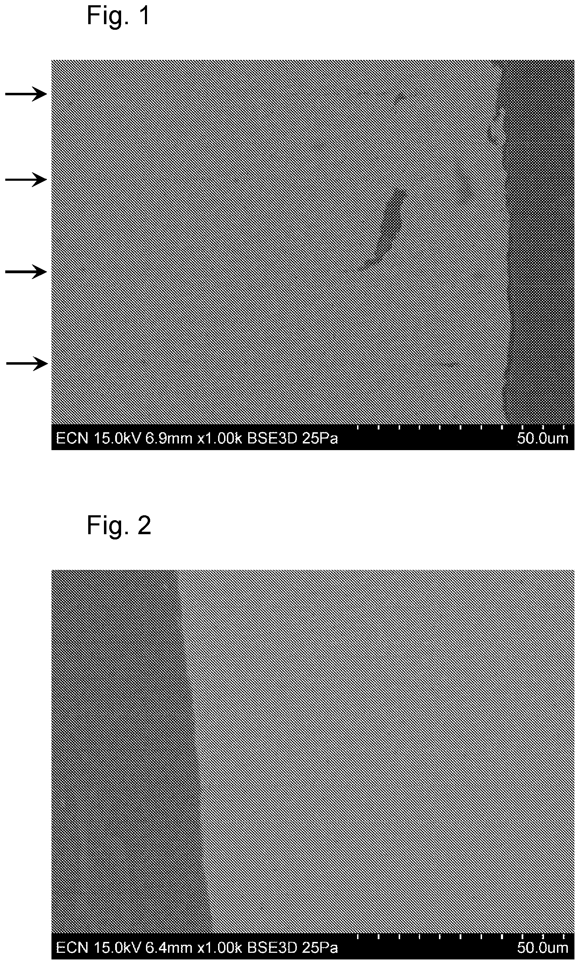

Figures 1 and 2 depict SEM images of the three-dimensional objects obtained in example 1. The images of the conventional object (slurry at room temperature) is depicted in Figure 1 and the images of the object according to the invention (slurry at 60 °C) are depicted in Figure 2. Clearly visible in the conventional object are the boundaries between the separate layers, reflected by horizontal lines of remain porosity (indicated with arrows). These boundaries are not visible for the object according to the present invention. Moreover, the conventional object contains large cavities, which are not visible for the object according to the invention.

### Example

A radiation-curable slurry for additive manufacturing was made of 28 wt% of the polymerizable resin A (T_{g} = 34 °C), comprising neopentyl glycol propoxylate (2 PO) diacrylate, 0.5 wt% of photoinitiator bis(2,4,6-trimethylbenzoyl)-phenylphosphineoxide (Irgacure ir819), 71.5 wt% of zirconium oxide (ZrO₂) particles. A slurry was made using a high speed mixer and then heated to a temperature of 60 °C. The printing was performed on an Admaflex printer at the same temperature, using radiation with a wavelength between 390 and 420 nm with a curing time of 2 s and a layer thickness of 20 µm. A control experiment was performed wherein the slurry was at room temperature (about 20 °C), and printing was performed at that same temperature. The bodies of both experiments were debinded and converted in air at a top temperature of 1000 °C. Sintering occurred at a temperature of 1500 °C. After sintering, a zirconium oxide body was obtained.

The resulting bodies were investigated by the naked eye and using scanning electron microscopy (SEM), see Figures 1 and 2. Naked eye inspection showed that the product according to the present invention had a smooth surface, while the conventional object displayed delamination cracks and moon-shaped fissures at the surface. The SEM images lead to a similar conclusion, wherein the conventional object shows delamination in the form of horizontal lines of remaining porosity at the boundary between the layers (indicated with arrows in Figure 1), which is not present for the object according to the invention. Furthermore, the conventional object contains large cavities, which are not visible for the object according to the invention. Clearly, the inventive object is more homogeneous and suffers from reduced delamination issues, when compared to the conventional object. In the inventive object, the separate layers are no longer visible, indicative of an improved adhesion between the layers and an increased density of the object.

## Claims

1. A method for the manufacture of a three-dimensional object, comprising:
(a) providing a three-dimensional model of the object, which divides the object in voxels;
(b) applying a first layer of a radiation-curable slurry onto a target surface, wherein the slurry contains a polymerizable resin and a photoinitiator;
(c) cause polymerization of the resin to form a cross-linked polymeric matrix by illuminating the voxels of the first layer in accordance with the model with radiation at a temperature above room temperature and above the glass transition temperature of the cross-linked polymeric matrix;
(d) applying a subsequent layer of the slurry on top of the first layer;
(e) cause polymerization of the resin to form a cross-linked polymeric matrix by illuminating the voxels of the subsequent layer in accordance with the model with radiation at a temperature above room temperature and above the glass transition temperature of the cross-linked polymeric matrix;
(f) repeating steps (d) and (e), wherein each time a subsequent layer is applied onto the previous layer, to produce a green body;
and optionally:
(g) removing the cross-linked polymeric matrix from the green body obtained in step (f) to obtain a brown body; and
(h) sintering the brown body obtained in step (h) to obtain a white body,
wherein the green body or the white body is the three-dimensional object.

2. The method according to claim 1, wherein the temperature applied in step (c) and each occurrence of step (e) is in the range of 40 - 100 °C, preferably in the range of 60 - 70 °C.

3. The method according to claim 1 or 2, wherein the polymerizable resin comprises monomers and/or oligomers that are polymerizable via radiation, preferably wherein the monomers are selected from urethanes, vinyl ether acrylates, allyl ether acrylates, maleimide acrylates, thiol acrylates, epoxide acrylates, oxetane acrylates and combinations thereof.

4. The method according to any of the preceding claims, wherein the temperature during step (b) and each occurrence of step (d) is the same as in step (c) and each occurrence of step (e).

5. The method according to any of the preceding claims, wherein the slurry further comprises one or more of metal, metal precursor, metal oxide or ceramic particles, preferably zirconium oxide particles.

6. The method according to any of the preceding claims, wherein the slurry comprises:
(i) 2-45 wt% of a polymerizable resin;
(ii) 0.001-10 wt% of one or more polymerization photoinitiators;
(iii) 55-98 wt% of the particles.

7. Method according to any of the preceding claims, wherein the thickness of the first and subsequent layers of slurry is between 5 and 300 µm, preferably between 6 and 200 µm, most preferably between 9 and 100 µm.

8. Method according to any of the preceding claims, wherein the radiation is chosen from the group consisting of actinic types of radiation, preferably UV-radiation.

9. Method according to any of the preceding claims, wherein the method is a stereolithographic (SLA) method wherein illuminating of the voxels of the slurry layers in steps (c) and (e) in accordance with the model is performed voxel-by-voxel; or a Dynamic Light Processing (DLP) method wherein illuminating of the voxels of the slurry layer in steps (c) and (e) is performed by simultaneously exposing all voxels in the layer to radiation.

10. Three-dimensional printed object, obtainable by the process according to any one of claims 1 - 9.

11. The three-dimensional printed object according to claim 10, which is made from plastic, metal, metal oxide and/or ceramics.

12. An additive manufacturing system comprising a 3D-printer for performing the method according to any one of claims 1 - 9, including:
(i) a substrate having a surface for depositing a layer of radiation-curable slurry,
(ii) a slurry depositor for containing and configured for depositing the slurry onto the substrate,
(ii) a stage configured to hold the three-dimensional object that is being manufactured,
(iv) a radiation source arranged to illuminate the layer of slurry deposited onto the surface,
(v) a positioning system which is configured to align the radiation source with respect to the slurry that is to be cured in accordance with a 3D model,
and a heating means for heating the slurry prior to being deposited onto the surface.

13. The additive manufacturing system according to claim 12, wherein the heating means are implemented into the slurry depositor, preferably wherein the heating means are capable of heating the slurry to a temperature above room temperature and above the glass transition temperature of the polymerized resin contained in the slurry, more preferably to a temperature of range of 40 - 100 °C, most preferably 60 - 70 °C.

## Patentansprüche

1. Verfahren zur Herstellung eines dreidimensionalen Objekts, das aufweist:
(a) Bereitstellen eines dreidimensionalen Modells des Objekts, das das Objekt in Voxel unterteilt;
(b) Aufbringen einer ersten Schicht einer strahlungshärtbaren Schlämme auf eine Zieloberfläche, wobei die Schlämme ein polymerisierbares Harz und einen Photoinitiator enthält;
(c) Bewirken einer Polymerisation des Harzes zum Bilden einer vernetzten Polymermatrix, durch Beleuchten der Voxel der ersten Schicht gemäß dem Modell mit Strahlung bei einer Temperatur über Raumtemperatur und über der Glasübergangstemperatur der vernetzten Polymermatrix;
(d) Aufbringen einer nachfolgenden Schicht der Schlämme auf die erste Schicht;
(e) Bewirken einer Polymerisation des Harzes zum Bilden einer vernetzten Polymermatrix, durch Beleuchten der Voxel der nachfolgenden Schicht gemäß dem Modell mit Strahlung bei einer Temperatur über Raumtemperatur und über der Glasübergangstemperatur der vernetzten Polymermatrix;
(f) Wiederholen der Schritte (d) und (e), wobei jedes Mal eine nachfolgende Schicht auf die vorherige Schicht aufgebracht wird, zum Erzeugen eines Grünkörpers;
und optional:
(g) Entfernen der vernetzten Polymermatrix aus dem in Schritt (f) erhaltenen Grünkörper, zum Erhalten eines Braunkörpers; und
(h) Sintern des in Schritt (h) erhaltenen Braunkörpers, zum Erhalten eines Weißkörpers,
wobei der Grünkörper oder der Weißkörper das dreidimensionale Objekt ist.

2. Verfahren gemäß Anspruch 1, wobei die in Schritt (c) und jedem Auftreten von Schritt (e) aufgebrachte Temperatur im Bereich von 40 - 100 °C, vorzugsweise im Bereich von 60 - 70 °C ist.

3. Verfahren gemäß Anspruch 1 oder 2, wobei das polymerisierbare Harz Monomere und/oder Oligomere aufweist, die mittels Strahlung polymerisierbar sind, vorzugsweise wobei die Monomere ausgewählt sind aus Urethanen, Vinyletheracrylaten, Allyletheracrylaten, Maleimidacrylaten, Thiolacrylaten, Epoxidacrylaten, Oxetanacrylaten und Kombinationen davon.

4. Verfahren gemäß einem der vorhergehenden Ansprüche, wobei die Temperatur während Schritt (b) und jedes Auftretens von Schritt (d) die gleiche wie bei Schritt (c) und jedem Auftreten von Schritt (e) ist.

5. Verfahren gemäß einem der vorhergehenden Ansprüche, wobei die Schlämme ferner eines oder mehrere von Metall, Metallvorläufer, Metalloxid oder Keramikpartikeln, vorzugsweise Zirkoniumoxidpartikeln, aufweist.

6. Verfahren gemäß einem der vorhergehenden Ansprüche, wobei die Schlämme aufweist:
(i) 2-45 Gew.-% eines polymerisierbaren Harzes;
(ii) 0,001-10 Gew.-% eines oder mehrerer Polymerisationsphotoinitiatoren;
(iii) 55-98 Gew.-% der Partikel.

7. Verfahren gemäß einem der vorhergehenden Ansprüche, wobei die Dicke der ersten und nachfolgenden Schichten der Schlämme zwischen 5 und 300 µm, vorzugsweise zwischen 6 und 200 µm, am meisten bevorzugt zwischen 9 und 100 µm ist.

8. Verfahren gemäß einem der vorhergehenden Ansprüche, wobei die Strahlung ausgewählt ist aus der Gruppe bestehend aus aktinischen Strahlungstypen, vorzugsweise UV-Strahlung.

9. Verfahren gemäß einem der vorhergehenden Ansprüche, wobei das Verfahren ein stereolithographisches (SLA) Verfahren ist, wobei das Beleuchten der Voxel der Schlämmeschichten bei den Schritten (c) und (e) gemäß dem Modell Voxel für Voxel durchgeführt wird; oder ein dynamisches Lichtverarbeitungsverfahren (DLP) ist, wobei das Beleuchten der Voxel der Schlämmeschicht bei den Schritten (c) und (e) durch gleichzeitiges Aussetzen einer Strahlung aller Voxel in der Schicht durchgeführt wird.

10. Dreidimensionales gedrucktes Objekt, das durch den Prozess gemäß einem der Ansprüche 1 bis 9 erhaltbar ist.

11. Dreidimensionales gedrucktes Objekt gemäß Anspruch 10, das aus Kunststoff, Metall, Metalloxid und/oder Keramik hergestellt ist.

12. Additives Herstellungssystem, das einen 3D-Drucker zum Durchführen des Verfahrens gemäß einem der Ansprüche 1 bis 9 aufweist, das umfasst:
(i) ein Substrat, das eine Fläche zum Aufbringen einer Schicht einer strahlungshärtbaren Schlämme hat,
(ii) einen Schlämmeeinleger zum Enthalten und gestaltet zum Aufbringen der Schlämme auf dem Substrat,
(ii) eine Bühne, die zum Halten des dreidimensionalen Objekts gestaltet ist, das hergestellt wird,
(iv) eine Strahlungsquelle, die zum Beleuchten der Schicht der auf der Fläche abgeschiedenen Schlämme angeordnet ist,
(v) ein Positionierungssystem, das zum Ausrichten der Strahlungsquelle bezüglich der Schlämme gestaltet ist, die gemäß einem 3D-Modell gehärtet werden soll,
und ein Heizmittel zum Erhitzen der Schlämme vor dem Aufbringen auf der Fläche.

13. Additives Herstellungssystem gemäß Anspruch 12, wobei das Heizmittel in dem Schlämmeeinleger implementiert ist, vorzugsweise wobei das Heizmittel in der Lage ist, die Schlämme auf eine Temperatur über Raumtemperatur und über der Glasübergangstemperatur des in der Schlämme enthaltenen polymerisierten Harzes zu erhitzen, bevorzugter auf eine Temperatur im Bereich von 40 - 100 °C, am bevorzugtesten 60 - 70 °C.

## Revendications

1. - Procédé de fabrication d'un objet tridimensionnel, comprenant :
a) fournir un modèle tridimensionnel de l'objet, qui divise l'objet en voxels ;
b) appliquer une première couche d'une bouillie durcissable par rayonnement sur une surface cible, la bouillie contenant une résine polymérisable et un photo-initiateur ;
c) amener la polymérisation de la résine à former une matrice polymère réticulée par éclairage des voxels de la première couche conformément au modèle avec un rayonnement à une température au-dessus de la température ambiante et au-dessus de la température de transition vitreuse de la matrice polymère réticulée ;
d) appliquer une couche suivante de la bouillie sur le dessus de la première couche ;
e) amener la polymérisation de la résine à former une matrice polymère réticulée par éclairage des voxels de la couche suivante conformément au modèle avec un rayonnement à une température au-dessus de la température ambiante et au-dessus de la température de transition vitreuse de la matrice polymère réticulée ;
f) répéter les étapes (d) et (e), où, à chaque fois qu'une couche suivante est appliquée sur la couche précédente, pour produire un corps cru ;
et facultativement :
g) retirer la matrice polymère réticulée à partir du corps cru obtenu à l'étape (f) pour obtenir un corps brun ; et
h) fritter le corps brun obtenu à l'étape (h) pour obtenir un corps blanc,
procédé dans lequel le corps cru ou le corps blanc est l'objet tridimensionnel.

2. - Procédé selon la revendication 1, dans lequel la température appliquée à l'étape (c) et à chaque occurrence de l'étape (e) est dans la plage de 40 à 100 °C, de préférence dans la plage de 60 à 70 °C.

3. - Procédé selon l'une des revendications 1 ou 2, dans lequel la résine polymérisable comprend des monomères et/ou des oligomères qui sont polymérisables par rayonnement, de préférence dans lequel les monomères sont choisis parmi les uréthanes, les vinyl éther acrylates, les allyl éther acrylates, les maléimide acrylates, les thiol acrylates, les époxyde acrylates, les oxétane acrylates et leurs combinaisons.

4. - Procédé selon l'une quelconque des revendications précédentes, dans lequel la température pendant l'étape (b) et à chaque occurrence de l'étape (d) est la même qu'à l'étape (c) et à chaque occurrence de l'étape (e).

5. - Procédé selon l'une quelconque des revendications précédentes, dans lequel la bouillie comprend en outre au moins l'un parmi les particules de métal, de précurseur de métal, d'oxyde métallique ou de céramique, de préférence les particules d'oxyde de zirconium.

6. - Procédé selon l'une quelconque des revendications précédentes, dans lequel la bouillie comprend :
i. 2 à 45 % en poids d'une résine polymérisable ;
ii. 0,001 à 10 % en poids d'un ou plusieurs photo-initiateurs de polymérisation ;
iii. 55 à 98 % en poids des particules.

7. - Procédé selon l'une quelconque des revendications précédentes, dans lequel l'épaisseur de la première couche de bouillie et des couches suivantes est entre 5 et 300 µm, de préférence entre 6 et 200 µm, de la façon que l'on préfère le plus entre 9 et 100 µm.

8. - Procédé selon l'une quelconque des revendications précédentes, dans lequel le rayonnement est choisi dans le groupe consistant en les types de rayonnement actiniques, de préférence le rayonnement UV.

9. - Procédé selon l'une quelconque des revendications précédentes, dans lequel le procédé est un procédé stéréolithographique (SLA) dans lequel l'éclairage des voxels des couches de bouillie dans les étapes (c) et (e) conformément au modèle est effectué voxel par voxel ; ou un procédé de traitement dynamique de la lumière (DLP) dans lequel l'éclairage des voxels de la couche de bouillie dans les étapes (c) et (e) est effectué par exposition simultanée tous les voxels dans la couche au rayonnement.

10. - Objet imprimé tridimensionnel, apte à être obtenu par le procédé selon l'une quelconque des revendications 1 à 9.

11. - Objet imprimé tridimensionnel selon la revendication 10, qui est fait de matière plastique, de métal, d'oxyde métallique et/ou de céramique.

12. - Système de fabrication additive comprenant une imprimante 3D pour la réalisation du procédé selon l'une quelconque des revendications 1 à 9, comprenant :
i. un substrat ayant une surface pour déposer une couche de bouillie durcissable par rayonnement ;
ii. un dispositif de dépôt de bouillie destiné à contenir et configuré pour déposer la bouillie sur le substrat ;
iii. une platine configurée pour maintenir l'objet tridimensionnel en cours de fabrication ;
iv. une source de rayonnement disposée pour éclairer la couche de bouillie déposée sur la surface ;
v. un système de positionnement qui est configuré pour aligner la source de rayonnement par rapport à la bouillie qui doit être durcie conformément à un modèle 3D,
et des moyens de chauffage pour chauffer la bouillie avant d'être déposée sur la surface.

13. - Système de fabrication additive selon la revendication 12, dans lequel les moyens de chauffage sont mis en œuvre dans le dispositif de dépôt de bouillie, de préférence dans lequel les moyens de chauffage sont capables de chauffer la bouillie à une température au-dessus de la température ambiante et au-dessus de la température de transition vitreuse de la résine polymérisée contenue dans la bouillie, de façon davantage préférée à une température dans la plage de 40 à 100 °C, de la façon que l'on préfère le plus de 60 à 70 °C.
